# EUROPEAN PATENT APPLICATION

(11) **EP 4 800 655 A1**
(43) Date of publication of application: **02.09.2026**
(21) Application number: 26160867.3
(22) Date of filing: 26.02.2026
(51) Int. Cl.: G06T 15/20, G06T 19/00

(54) **VIRTUAL VIEWPOINT IMAGING INCLUDING A TRAJECTORY REPRESENTATION**

(30) Priority: 28.02.2025 JP 2025031392
(71) Applicant: Canon Kabushiki Kaisha, Tokyo 146-8501 (JP)
(72) Inventor: ONUMA, Kazufumi, Ohta-ku, Tokyo, 146-8501 (JP)
(74) Representative: TBK

(57) **Abstract**

Images captured by image capturing apparatuses are used to generate a virtual viewpoint image including a representation of a trajectory of a target three-dimensional shape. An image processing apparatus(102) according to the present disclosure obtains(S402) shape data indicating three-dimensional shape of each object in a target space; specifies(S502), from the three-dimensional shapes indicated by the shape data, the target three-dimensional shape with size within a predetermined range; generates(S505) trajectory information that indicates a trajectory of the specified target three-dimensional shape, in which information on positions of the target three-dimensional shape and corresponding timecode are associated; obtains (S403) virtual viewpoint information indicating the position of a virtual viewpoint and the viewing direction at the virtual viewpoint; and generates(S405), based on the shape data, the trajectory information, and the virtual viewpoint information, a virtual viewpoint image including a representation of the trajectory and corresponding to appearance from the virtual viewpoint.

## Description

### TECHNICAL FIELD

The present disclosure relates to a technology for generating virtual viewpoint images.

### BACKGROUND

Technologies have been proposed for generating, based on multiple images captured by multiple image capturing apparatuses, an image (hereinafter referred to as a "virtual viewpoint image") corresponding to the appearance from any virtual viewpoint specified by a user or some other entity (hereinafter referred to as a "virtual viewpoint"). Such a virtual viewpoint image may enable viewing a sport from a viewpoint that cannot be offered simply by imaging with an image capturing apparatus. Furthermore, in the broadcasting of ball sports such as baseball, a trajectory of a ball may be identified and superimposed on a broadcast video image generated from captured images.

### SUMMARY

Unfortunately, to render a trajectory of a target object such as a ball as superimposed on a virtual viewpoint image, conventional approaches require a separate image capturing apparatus for identifying the trajectory of the target object, in addition to image capturing apparatuses for generating the virtual viewpoint image.

The present disclosure in its first aspect provides an image processing apparatuses as specified in claim 1. Optional features are specified in claim 2 to 15.

The present disclosure in its second aspect provides an image processing method as specified in claim 16.

The present disclosure in its third aspect provides a program as specified in claim 17.

Features of the present disclosure will become apparent from the following description of embodiments with reference to the attached drawings. The following description of embodiments is described by way of example.

### BRIEF DESCRIPTION OF THE DRAWINGS

FIG. 1 is a block diagram illustrating an example of the configuration of an image processing system according to a first embodiment;
FIG. 2 is a block diagram illustrating an example of the logical configuration of an image processing apparatus according to the first embodiment;
FIG. 3 is a block diagram illustrating an example of the hardware configuration of the image processing apparatus according to the first embodiment;
FIG. 4 is a flowchart illustrating an example of a process sequence of the image processing apparatus according to the first embodiment;
FIG. 5 is a flowchart illustrating an example of the sequence of identification processing in a specifying unit according to the first embodiment;
FIG. 6 is a diagram for describing an example of rules used for the identification processing in the specifying unit according to the first embodiment;
FIG. 7 is a flowchart illustrating an example of the sequence of target object identification processing in the specifying unit according to the first embodiment;
FIGS. 8A and 8B are diagrams illustrating examples of virtual viewpoint images generated by an image generation unit according to the first embodiment;
FIG. 9 is a diagram illustrating an example of a GUI according to a variation of the first embodiment; and
FIGS. 10A and 10B are diagrams illustrating examples of virtual viewpoint images according to variations of the first embodiment.

### DESCRIPTION OF THE EMBODIMENTS

Hereinafter, with reference to the attached drawings, the present disclosure is explained in detail in accordance with preferred embodiments. Configurations shown in the following embodiments are merely exemplary and the present disclosure is not limited to the configurations shown schematically.

### [First embodiment]

### (Configuration of image processing system)

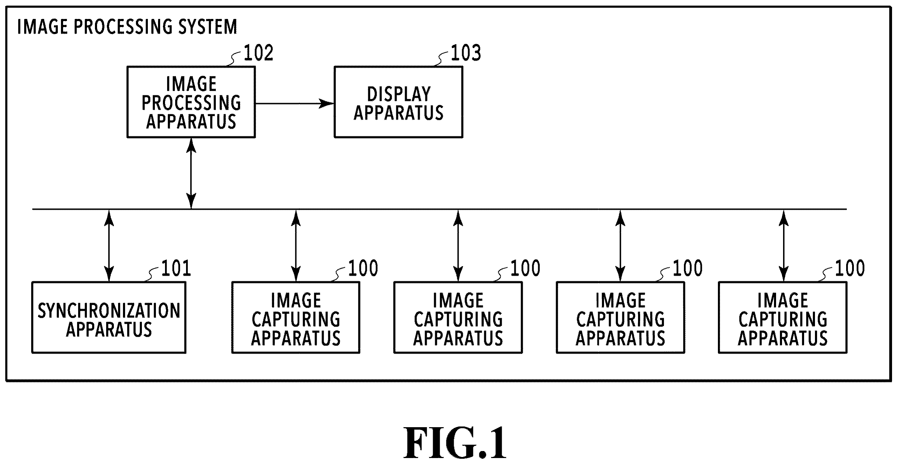

FIG. 1 is a block diagram illustrating an example of the configuration of an image processing system according to a first embodiment. The image processing system includes multiple image capturing apparatuses 100, a synchronization apparatus 101, an image processing apparatus 102, and a display apparatus 103. Note that the image processing system may include a single image processing apparatus 102 or multiple image processing apparatuses 102. The following description assumes that the image processing system includes a single image processing apparatus 102.

The image capturing apparatuses 100, which may each be implemented by a digital video camera, capture space to be imaged (hereinafter referred to as an "imaging region") from mutually different directions in synchronization with each other. The synchronization apparatus 101 transmits a synchronization signal to each of the image capturing apparatuses 100. Specifically, each of the image capturing apparatuses 100 receives a synchronization signal from the synchronization apparatus 101 and captures an image based on the received synchronization signal. Data on the captured images (hereinafter referred to as "multi-viewpoint images") obtained through the synchronized imaging by the image capturing apparatuses 100 is output to the image processing apparatus 102. Note that, to be able to capture objects present in the imaging region (hereinafter simply referred to as "objects") from multiple directions, the image capturing apparatuses 100 are, for example, located to surround the imaging region.

The image processing apparatus 102 receives the multi-viewpoint image data output from the image capturing apparatuses 100, generates a virtual viewpoint image corresponding to the appearance from any virtual viewpoint, and outputs, to the display apparatus 103, data on a displayed image that includes the generated virtual viewpoint image. The display apparatus 103, which may be implemented by a liquid crystal display, receives the displayed-image data output from the image processing apparatus 102 and displays the displayed image.

### (Configuration of image processing apparatus)

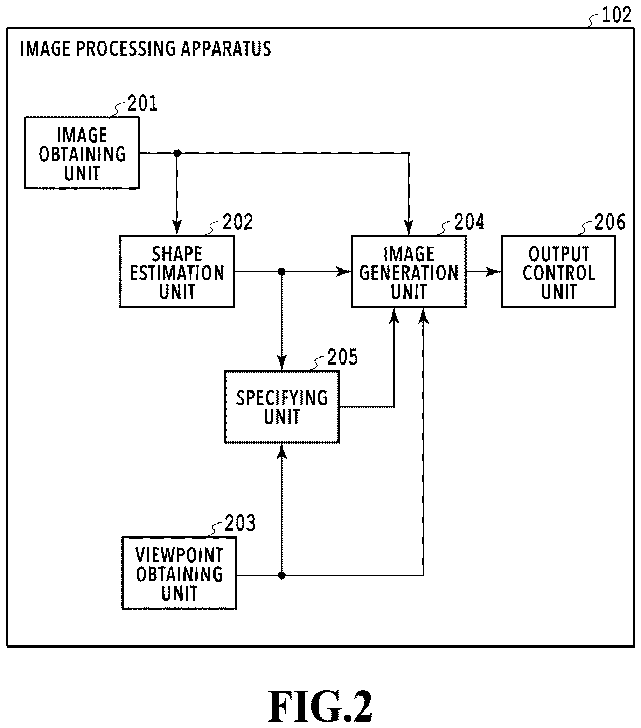

FIG. 2 is a block diagram illustrating an example of the logical configuration of the image processing apparatus 102 according to the first embodiment. As the logical configuration, the image processing apparatus 102 includes an image obtaining unit 201, a shape estimation unit 202, a viewpoint obtaining unit 203, an image generation unit 204, a specifying unit 205, and an output control unit 206. Processing in each unit in the logical configuration of the image processing apparatus 102 is performed by processing hardware, such as an application specific integrated circuit (ASIC), included in the image processing apparatus 102. Alternatively, the processing may be performed by software that uses an arithmetic processing unit, such as a central processing unit (CPU) or a graphics processing unit (GPU), and a memory, included in the image processing apparatus 102. Details of the processing in each unit in the logical configuration of the image processing apparatus 102 will be described below.

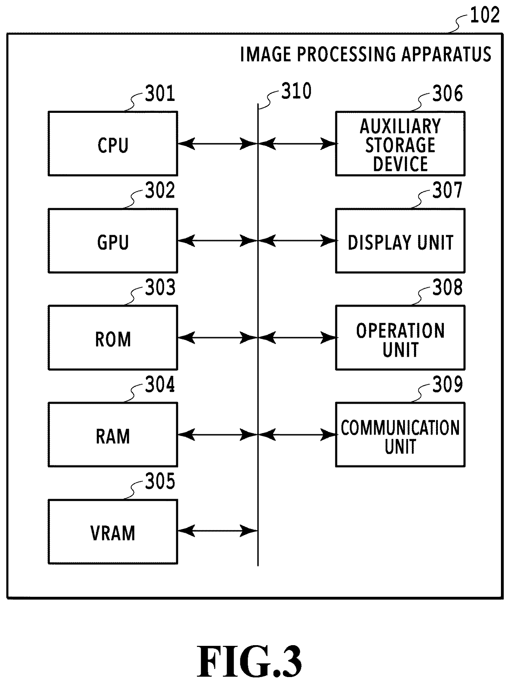

With reference to FIG. 3, the hardware configuration of the image processing apparatus 102 will be described in a case where the processing in each unit in the logical configuration of the image processing apparatus 102 is performed by software execution. FIG. 3 is a block diagram illustrating an example of the hardware configuration of the image processing apparatus 102 according to the first embodiment. The image processing apparatus 102 is implemented by a computer, which includes, as its hardware configuration, a CPU 301, a GPU 302, a ROM 303, a RAM 304, a VRAM 305, and an auxiliary storage device 306. The computer also includes, as its hardware configuration, a display unit 307, an operation unit 308, a communication unit 309, and a bus 310.

The CPU 301 controls the computer using programs and data stored in a location such as the ROM 303 or the auxiliary storage device 306, thereby causing the computer to function as the units in the logical configuration of the image processing apparatus 102. The ROM 303 stores programs and various types of data that do not require modification. The auxiliary storage device 306, which may be implemented by, for example, a hard disk drive, stores programs and various types of data, including image data and audio data. The RAM 304 operates as a work area for the CPU 301 and temporarily stores programs and data supplied from the ROM 303 or the auxiliary storage device 306, or data supplied from the outside via the communication unit 309.

The GPU 302 controls the computer, in coordination with the CPU 301, using programs or data stored in a location such as the ROM 303 or the auxiliary storage device 306, thereby causing the computer to function as the units in the logical configuration of the image processing apparatus 102. The VRAM 305, which is a memory for graphics processing, operates as a work area for the GPU 302 and temporarily stores programs and data supplied from a location such as the ROM 303 or the auxiliary storage device 306. Note that the image processing apparatus 102 may include one or more dedicated processing hardware units different from the CPU 301 and the GPU 302, so that the dedicated processing hardware may perform at least part of the processing supposed to be performed by the CPU 301 or the GPU 302. Examples of such dedicated processing hardware include an ASIC, a field programmable gate array (FPGA), and a digital signal processor (DSP).

The display unit 307 may be implemented by a liquid crystal display or light-emitting diodes (LEDs). The display unit 307 may display a graphical user interface (GUI) that allows a user to operate the image processing apparatus 102 or to view the state of the image processing apparatus 102. The operation unit 308, which may be implemented by a keyboard, a mouse, or a touch-sensitive panel, receives user operations and inputs various corresponding instructions to the CPU 301. The CPU 301 also operates as a display control unit for controlling the display unit 307, and an operation control unit for controlling the operation unit 308.

The communication unit 309 is used for communication between the image processing apparatus 102 and external devices. For example, if the image processing apparatus 102 is wire-connected with external devices, the communication unit 309 has a communication cable connected thereto. If the image processing apparatus 102 is capable of wireless communication with external devices, the communication unit 309 includes an antenna. The bus 310 communicatively connects the above hardware components of the image processing apparatus 102 to transfer information between the components. Although the following description assumes that the display unit 307 and the operation unit 308 reside in the image processing apparatus 102, at least one of the display unit 307 and the operation unit 308 may reside outside the image processing apparatus 102 as a separate device.

The image obtaining unit 201 obtains data on multi-viewpoint images output from the image capturing apparatuses 100. The image obtaining unit 201 also obtains camera parameters associated with each captured image constituting the multi-viewpoint image captured by each of the image capturing apparatuses 100. The camera parameters include extrinsic parameters related to the position and orientation of the image capturing apparatus that captured the captured image, and intrinsic parameters related to the focal length, the principal point, and the resolution. Note that the camera parameters may be pre-stored in a location such as the auxiliary storage device 306, or may be output from each image capturing apparatus 100. The multi-viewpoint image data, and the camera parameters corresponding to each captured image resulting from imaging by each image capturing apparatus or multiple image capturing apparatuses, obtained by the image obtaining unit 201, are stored in a location such as the RAM 304 or the auxiliary storage device 306.

The shape estimation unit 202 estimates the three-dimensional shapes of objects using the multi-viewpoint images and the camera parameters corresponding to each captured image constituting the multi-viewpoint images, obtained by the image obtaining unit 201. Specifically, for example, the shape estimation unit 202 first separates the foreground and the background of each captured image to extract, as silhouettes, regions containing the representations of objects in the captured image. Techniques of separating the foreground and the background are well known and therefore will not be described. Note that, in a case where the foreground and the background are separated using a method such as the background difference method, background image data corresponding to each captured image is assumed to be pre-stored in a location such as the RAM 304 or the auxiliary storage device 306. Next, using the camera parameters of each image capturing apparatus 100 obtained by the image obtaining unit 201, the shape estimation unit 202 estimates the three-dimensional shapes of the objects by a technique such as the shape-from-silhouette method. The shape-from-silhouette method is well known and therefore will not be described. Data on the three-dimensional shapes of the objects estimated by the shape estimation unit 202 is output to and stored in a location such as the auxiliary storage device 306. The objects here may each be a natural person, or an item handled by a natural person, for which the three-dimensional shape is to be estimated.

The viewpoint obtaining unit 203 obtains information on a virtual viewpoint (hereinafter referred to as "virtual viewpoint information"). The virtual viewpoint information includes the following: information on the position of the virtual viewpoint and the viewing direction at the virtual viewpoint, which correspond to the extrinsic parameters of each image capturing apparatus; information on the focal length and the principal point, which correspond to the intrinsic parameters; and information on the timecode of a virtual viewpoint image to be generated. The viewing direction at the virtual viewpoint will hereinafter be referred to as the "orientation of the virtual viewpoint." Specifically, for example, the user operates the operation unit 308 to input the position and orientation of the virtual viewpoint, the focal length and principal point at the virtual viewpoint, and the timecode of a virtual viewpoint image to be generated. The viewpoint obtaining unit 203 receives signals corresponding to these inputs from the operation unit 308 to obtain the virtual viewpoint information.

The image generation unit 204 generates a virtual viewpoint image. Specifically, first, based on the timecode in the virtual viewpoint information obtained by the viewpoint obtaining unit 203, the image generation unit 204 obtains, by reading from a location such as the auxiliary storage device 306, data on materials necessary for generating a virtual viewpoint image corresponding to the timecode. The materials necessary for generating a virtual viewpoint image here include, for example, data corresponding to the timecode, including data on the three-dimensional shapes of the objects, data on the captured images, the camera parameters, and data on background models and background texture images.

Next, the image generation unit 204 uses the obtained material data to generate a virtual viewpoint image corresponding to the appearance from the virtual viewpoint indicated by the virtual viewpoint information. Techniques of generating a virtual viewpoint image corresponding to any virtual viewpoint using data on the three-dimensional shapes of objects, data on captured images, camera parameters, and data on background models and background texture images are well known and therefore will not be described. Data on the virtual viewpoint image generated by the image generation unit 204 is output to the output control unit 206. Note that the image generation unit 204 also renders, based on trajectory information to be described below, a trajectory of a predetermined object, such as a ball, on the virtual viewpoint image. Details of the rendering processing will be described below.

The specifying unit 205 identifies a predetermined object, such as a ball, in the imaging region using the data on the three-dimensional shapes estimated by the shape estimation unit 202. Details of the identification processing in the specifying unit 205 will be described below. The result of identifying the predetermined object by the specifying unit 205 is stored as trajectory information in a location such as the auxiliary storage device 306 in association with an identifier with which the object is uniquely identifiable. The output control unit 206 generates a displayed image that includes the virtual viewpoint image generated by the image generation unit 204. The output control unit 206 outputs data on the generated displayed image to the display apparatus 103, which then displays the displayed image.

### (Operations of image processing apparatus)

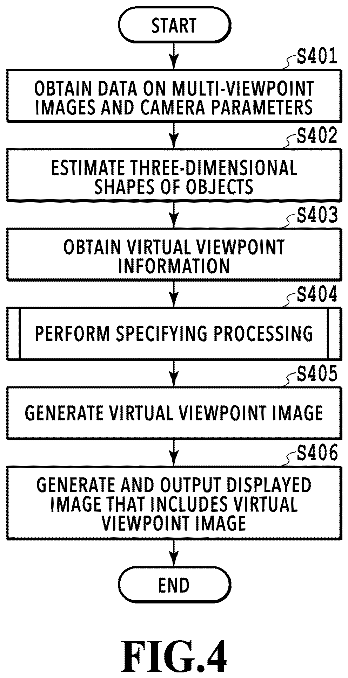

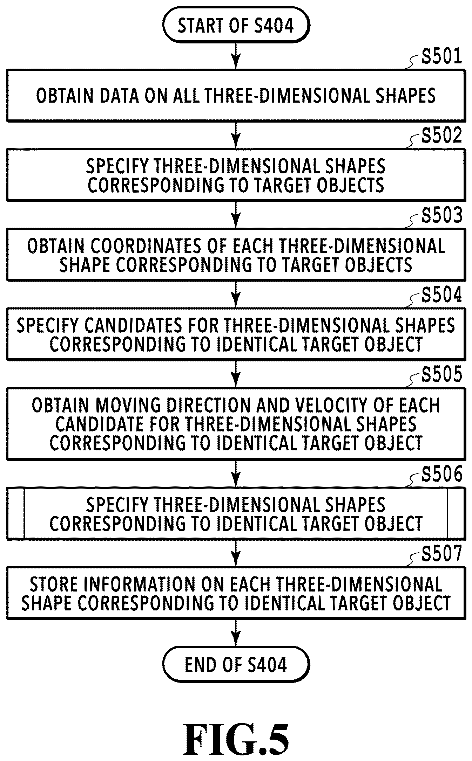

With reference to FIGS. 4 and 5, an example of operations of the image processing apparatus 102 will be described. FIG. 4 is a flowchart illustrating an example of a process sequence of the image processing apparatus 102 according to the first embodiment. Note that the symbol "S" in the following description denotes step. First, at S401, the image obtaining unit 201 obtains data on multi-viewpoint images, and camera parameters corresponding to each captured image constituting the multi-viewpoint images. The multi-viewpoint image data and the camera parameters obtained at S401 are stored in a location such as the auxiliary storage device 306. Next, at S402, the shape estimation unit 202 estimates the three-dimensional shapes of objects using the multi-viewpoint image data, and the camera parameters corresponding to each captured image, obtained at S401. Data on the three-dimensional shapes estimated at S402 is stored in a location such as the auxiliary storage device 306. Next, at S403, the viewpoint obtaining unit 203 obtains virtual viewpoint information. Next, at S404, the specifying unit 205 performs identification processing to be described below.

### (Identification processing in specifying unit)

FIG. 5 is a flowchart illustrating an example of the identification processing in the specifying unit 205, i.e., the sequence of the identification processing at S404 shown in the flowchart of FIG. 4, according to the first embodiment. Note that the description in this embodiment illustrates an example in which the imaging subject is baseball, and the objects to be identified (hereinafter referred to as "target objects") are balls used in baseball.

The processing at S404 starts at S501, where the specifying unit 205 obtains, from among the three-dimensional shapes obtained in the estimation processing at S402, data on all the three-dimensional shapes corresponding to the period indicated by the timecode in the virtual viewpoint information obtained at S403. Specifically, the specifying unit 205 obtains data on all the three-dimensional shapes that satisfy the above condition by reading the data from a location such as the auxiliary storage device 306.

Next, at S502, the specifying unit 205 specifies the three-dimensional shapes corresponding to the target objects from among the three-dimensional shapes obtained at S501. Specifically, the specifying unit 205 judges whether each three-dimensional shape obtained at S501 is of a size within a predetermined range, and specifies those judged to be of a size within the range as the three-dimensional shapes corresponding to the target objects (the ball). The size of each three-dimensional shape here refers to at least one of the volume, the surface area, and external dimensions of the three-dimensional shape. For example, in a case where the three-dimensional shape data of an object is represented by a dense point cloud, the specifying unit 205 may obtain the approximate volume of the object based on the number of points in the point cloud. In a case where the three-dimensional shape data of an object is represented by a point cloud indicating the surface geometry of the object, the specifying unit 205 may obtain the approximate surface area of the object based on the number of points in the point cloud. For the external dimensions of the three-dimensional shape of an object, at least one of the values of the width, depth, and height may be used.

Next, at S503, for each of all the three-dimensional shapes corresponding to the target objects specified at S502, the specifying unit 205 obtains coordinates indicating the position of the three-dimensional shape (hereinafter referred to as the "coordinates of the three-dimensional shape"). Specifically, for example, the specifying unit 205 obtains, as the coordinates of the three-dimensional shape, the coordinates of a position such as the centroid or center of the three-dimensional shape. The coordinates of the three-dimensional shape are not limited to the coordinates of a position such as the centroid or center of the three-dimensional shape. For example, the coordinates of the three-dimensional shape may indicate the position of a bounding box that contains the three-dimensional shape.

Next, at S504, based on the coordinates of the three-dimensional shapes corresponding to each target object obtained at S503 and the timecode, the specifying unit 205 specifies candidates for the three-dimensional shapes corresponding to an identical target object. Specifically, for example, the specifying unit 205 judges whether the distance between the coordinate points obtained at S503 at any timepoint and a timepoint proximate to that timepoint in the period indicated by the above timecode is within a predetermined range. If it is judged that the distance between the coordinate points at the two timepoints is within the predetermined range, the specifying unit 205 specifies the two three-dimensional shapes at the two timepoints as candidates for the three-dimensional shapes corresponding to the identical target object. The processing at S504 is repeated for the entire period indicated by the above timecode. Through this repeated processing, candidates for time-series three-dimensional shapes corresponding to the identical target object are specified for the entire period indicated by the above timecode.

Next, at S505, the specifying unit 205 obtains the moving direction and the velocity of each candidate for the three-dimensional shapes corresponding to the identical target object specified at S504. Specifically, the specifying unit 205 calculates the moving direction and the velocity of a certain three-dimensional shape based on the differences in coordinate and timecode between the certain three-dimensional shape and a three-dimensional shape having a timecode proximate to the timecode of the certain three-dimensional shape. The method of obtaining the moving direction and the velocity of each three-dimensional shape is not limited to the above manner. For example, the specifying unit 205 may calculate the moving direction and the velocity of a certain three-dimensional shape based on the differences in coordinate and timecode between the three-dimensional shapes having the timecodes immediately preceding and following the timecode of the certain three-dimensional shape.

Next, at S506, based on at least one of the moving direction and the velocity obtained at S505, the specifying unit 205 specifies, according to predetermined rules, the three-dimensional shapes corresponding to the identical target object from among the candidate three-dimensional shapes specified at S504. The specifying unit 205 further assigns an identifier with which the target object is uniquely identifiable to each specified three-dimensional shape corresponding to the identical target object.

The description in this embodiment has illustrated an aspect in which the specifying unit 205 specifies, at S506, the three-dimensional shapes corresponding to the identical target object from among the candidate three-dimensional shapes based on at least one of the moving direction and the velocity. However, the method of specifying the three-dimensional shapes corresponding to the identical target object is not limited to the above manner. For example, the specifying unit 205 may specify the three-dimensional shapes corresponding to the identical target object simply based on the coordinates and the timecodes of the three-dimensional shapes corresponding to each target object obtained at S503. In other words, the specifying unit 205 may regard the candidates for the three-dimensional shapes corresponding to the identical target object specified at S504 directly as the three-dimensional shapes corresponding to the identical target object, rather than as candidates.

Next, at S507, the specifying unit 205 stores, in a location such as the auxiliary storage device 306, the information on each three-dimensional shape specified at S506, including the timecode, coordinates, moving direction, velocity, and identifier, as trajectory information indicating the trajectory of the target object. After S507, the specifying unit 205 terminates the process of the flowchart shown in FIG. 5, i.e., the processing at S404 shown in FIG. 4.

### (Continued description of operations of image processing apparatus)

S404 is followed by S405, where the image generation unit 204 generates a virtual viewpoint image based on the multi-viewpoint image data and the camera parameters obtained at S401, the three-dimensional shape data estimated at S402, and the virtual viewpoint information obtained at S403. Details of the processing of generating the virtual viewpoint image at S405 will be described below. Next, at S406, the output control unit 206 generates a displayed image that includes the virtual viewpoint image generated at S405, and outputs data on the generated displayed image to the display apparatus 103, which then displays the displayed image. After S406, the image processing apparatus 102 terminates the process of the flowchart shown in FIG. 4.

The description in this embodiment has illustrated an aspect in which the multi-viewpoint image data obtained by imaging during the entire processing period is stored in a location such as the auxiliary storage device 306 before the processing at S404. However, the scope of application of the technology disclosed herein is not limited to such aspect. For example, the technology disclosed herein is also applicable to cases where each image capturing apparatus 100 continuously captures moving images and sequentially outputs frame data. In such a case, for example, the image processing apparatus 102 repeats the process shown in the flowchart of FIG. 4 each time frame data is output from each image capturing apparatus 100. Specifically, each time frame data is output from each image capturing apparatus 100, the frame data is obtained at S401, and the processing at S402 and the subsequent steps is performed for data having the latest timecode.

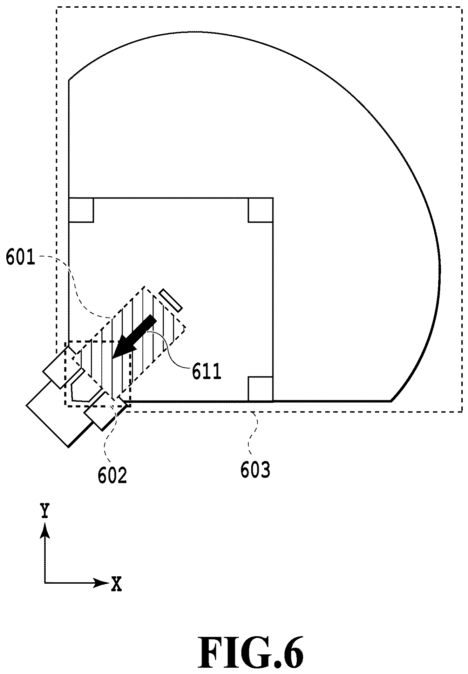

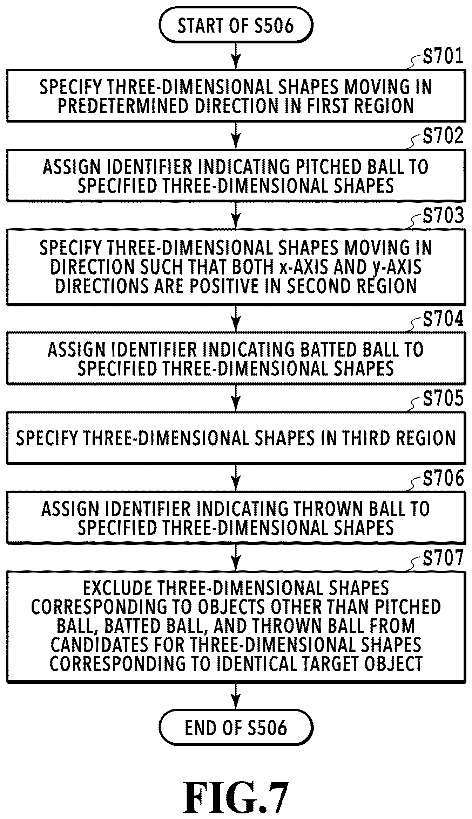

With reference to FIGS. 6 and 7, the above-mentioned rules for the specifying unit 205 to specify the three-dimensional shapes corresponding to the identical target object will be described. FIG. 6 is a diagram for describing an example of rules used for the specifying processing in the specifying unit 205 according to the first embodiment. Specifically, FIG. 6 illustrates an overhead view of a baseball field in an example where the imaging subject is baseball. The baseball field is the imaging region and includes preset specific regions, for example, the three regions 601 to 603 shown in FIG. 6. In each of the three regions 601 to 603, the specifying unit 205 identifies a target object moving in a predetermined direction. Details of the identification processing will be described with reference to FIG. 7.

FIG. 7 is a flowchart illustrating an example of the sequence of the target object identification processing in the specifying unit 205, i.e., the process sequence at S506 shown in FIG. 5, according to the first embodiment. First, at S701, the specifying unit 205 specifies three-dimensional shapes moving in a predetermined direction (indicated by an arrow 611) in a first region (the region 601 shown in FIG. 6) from among the candidates for the three-dimensional shapes corresponding to the identical target object specified at S504. Next, at S702, the specifying unit 205 determines that the three-dimensional shapes specified at S701 correspond to the target object (the ball) thrown by a pitcher (hereinafter referred to as a "pitched ball") and assigns an identifier indicating a pitched ball to these three-dimensional shapes.

Whether three-dimensional shapes are in the region 601 is judged at S701 based on the coordinates of the three-dimensional shapes obtained at S503. The moving direction is judged at S701 based on comparing the moving direction obtained at S505 with the vector or angle that indicates the arrow 611 and determining whether the difference between the moving direction and the vector or angle is within a predetermined range. The specifying processing at S701 may require additional conditions, such as a condition that only three-dimensional shapes with velocities within the range between 140 km/h (kilometers per hour) and 160 km/h should be judged to correspond to the pitched ball.

S702 is followed by S703, where the specifying unit 205 specifies, from among the candidates for the three-dimensional shapes corresponding to the identical target object specified at S504, those moving in a direction such that both the x-axis direction and the y-axis direction are positive in a second region (the region 602 shown in FIG. 6). Specifically, the specifying processing at S703 may be performed, for example, for the three-dimensional shapes other than those corresponding to the pitched ball among the candidates for the three-dimensional shapes corresponding to the identical target object specified at S504. Note that the method of judging whether three-dimensional shapes are in the region 602 at S703 and the method of judging the moving direction at S703 are the same as the judging methods at S701 and therefore will not be described.

Next, at S704, the specifying unit 205 determines that the three-dimensional shapes specified at S703 correspond to the target object (the ball) hit by a batter (hereinafter referred to as a "batted ball") and assigns an identifier indicating a batted ball to these three-dimensional shapes. Note that, in the processing at S704, the specifying unit 205 determines that all the three-dimensional shapes along the temporally continuous trajectory, including those moving beyond the region 602, correspond to the batted ball and assigns the identifier indicating a batted ball to these three-dimensional shapes.

Next, at S705, the specifying unit 205 specifies three-dimensional shapes in a third region (the region 603 shown in FIG. 6) from among the three-dimensional shapes other than those corresponding to the pitched ball and the batted ball in the candidates for the three-dimensional shapes corresponding to the identical target object as specified at S504. Note that the method of judging whether three-dimensional shapes are in the region 603 at S705 is the same as the judging method at S701 and therefore will not be described. Next, at S706, the specifying unit 205 determines that the three-dimensional shapes specified at S705 correspond to the target object (the ball) thrown by a fielder (hereinafter referred to as a "thrown ball") and assigns an identifier indicating a thrown ball to these three-dimensional shapes.

Next, at S707, the specifying unit 205 excludes, from the candidates of the three-dimensional shapes corresponding to the identical target object specified at S504, those corresponding to objects other than the pitched ball, the batted ball, and the thrown ball. Specifically, the specifying unit 205 deletes data on the excluded three-dimensional shapes from a location such as the auxiliary storage device 306. The specifying unit 205 may assign an identifier indicating the exclusion to the excluded three-dimensional shapes. After S707, the specifying unit 205 terminates the process of the flowchart shown in FIG. 7, i.e., the processing at S506 shown in FIG. 5.

In the estimation processing for a specific point in time, the shape estimation unit 202 may fail to estimate the shape of the target object (the ball) due to the target object coming into contact with a white line or some other feature on the field, resulting in missing three-dimensional shape data of the target object. In the following description, the above specific point in time will be referred to as a specific timepoint. The ball here moves in accordance with physical laws. Therefore, the approximate position (coordinates) of the three-dimensional shape at the specific timepoint may be estimated based on, for example, the coordinates, moving direction, and velocity of the three-dimensional shape at the timepoint immediately preceding the specific timepoint, as well as the gravitational acceleration. However, the estimated position at the specific timepoint may vary significantly in cases where the ball is caught by a fielder or bounces off the field surface or a fence. In view of the above, the specifying unit 205 judges that three-dimensional shape data corresponding to the target object at the specific timepoint is missing if three-dimensional shapes corresponding to the target object are accurately estimated for the immediately preceding and following timepoints.

If the specifying unit 205 judges that three-dimensional shape data corresponding to the target object is missing, the specifying unit 205 may perform the following processing. For example, the specifying unit 205 estimates and interpolates the position of the target object at the specific timepoint based on the coordinates, moving direction, and velocity of at least one of the three-dimensional shapes corresponding to the target object at the immediately preceding timepoint and the immediately following timepoint, as well as on the gravitational acceleration. Specifically, the specifying unit 205 estimates the coordinates of the position to which the three-dimensional shape corresponding to the target object at the immediately preceding timepoint may have moved in a period of one frame, based on the moving direction and velocity of that three-dimensional shape and on the gravitational acceleration. The method of interpolating the missing three-dimensional shape data corresponding to the target object is not limited to the above manner. For example, the specifying unit 205 may estimate the position of the three-dimensional shape corresponding to the target object at the specific timepoint as the midpoint between the positions of the three-dimensional shapes corresponding to the target object at the immediately preceding and following timepoints.

### (Rendering processing in image generation unit)

The image generation unit 204 generates, based on the virtual viewpoint information, the virtual viewpoint image corresponding to the period indicated by the timecode in the virtual viewpoint information. To this end, the image generation unit 204 obtains, by reading from a location such as the auxiliary storage device 306, trajectory information corresponding to the indicated period. In addition to the trajectory information corresponding to the indicated period, the image generation unit 204 may also obtain, by reading from a location such as the auxiliary storage device 306, trajectory information for a past period corresponding to a predetermined number of frames immediately preceding the start of the indicated period.

The image generation unit 204 then generates (also referred to as "renders") the virtual viewpoint image. This involves arranging a mesh model or a two-dimensional billboard at the coordinates of each three-dimensional shape corresponding to the target object indicated by the obtained trajectory information. The mesh model or the billboard arranged at the coordinates of each three-dimensional shape represents, for example, a virtual object that resembles the shape or other attributes of the target object. Through this rendering processing, the trajectory of a representation of the virtual object arranged at the positions of the three-dimensional shapes corresponding to the target object is rendered in the virtual viewpoint image. The above mesh model or two-dimensional billboard is arranged in a three-dimensional space. Therefore, if the virtual viewpoint is moved, panned, or rotated, the trajectory of the representation of the virtual object arranged at the positions of the three-dimensional shapes corresponding to the target object is still appropriately rendered in the virtual viewpoint image.

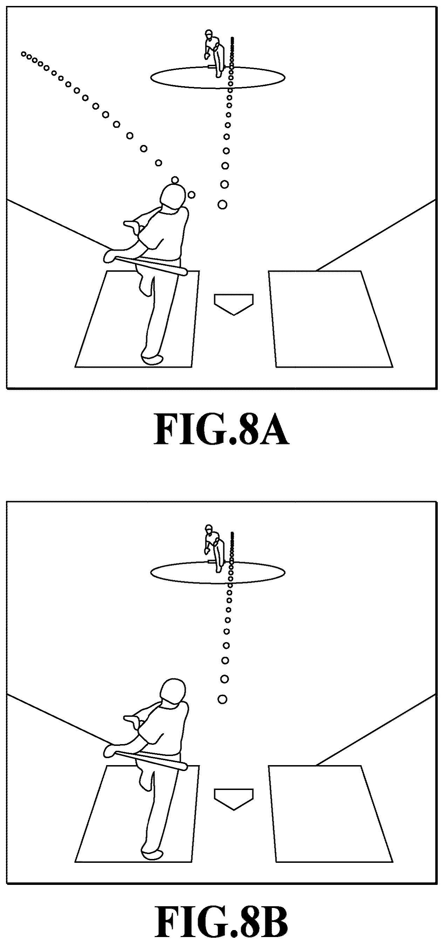

FIGS. 8A and 8B are diagrams illustrating examples of virtual viewpoint images generated by the image generation unit 204 according to the first embodiment. Specifically, FIG. 8A illustrates an example of a virtual viewpoint image that includes a rendered trajectory of a representation of a virtual object arranged at the positions of the three-dimensional shapes corresponding to the target object having identifiers indicating a pitched ball and a batted ball as assigned by the specifying unit 205. FIG. 8B illustrates an example of a virtual viewpoint image that includes a rendered trajectory of a representation of a virtual object arranged at the positions of the three-dimensional shapes corresponding to the target object having an identifier indicating a pitched ball as assigned by the specifying unit 205. Each three-dimensional shape corresponding to the target object has an identifier assigned thereto that identifies the type of the target object. This allows rendering the trajectory of the representation of the virtual object arranged at the positions of the three-dimensional shapes corresponding to the target object relevant to only a specific state (e.g., a pitched ball) or a specific period, for example, as shown in FIG. 8B. Note that, if an identifier is specified in advance for the target object to be rendered in the virtual viewpoint image, the image generation unit 204 may obtain only the trajectory information corresponding to that identifier from a location such as the auxiliary storage device 306.

The image processing apparatus 102 according to this embodiment can identify the positions of the target object based on three-dimensional shapes estimated during intermediate processing involved in the generation of a virtual viewpoint image, thus eliminating the need for a dedicated image capturing apparatus for identifying the positions of the target object. Furthermore, trajectory information is specified based on the three-dimensional shapes corresponding to the target object. With this trajectory information, a virtual object corresponding to the target object can be arranged at the positions of the target object in the coordinate system of the virtual viewpoint of the virtual viewpoint image. Thus, the trajectory of a representation of the virtual object corresponding to the target object can be rendered in the virtual viewpoint image without the use of a dedicated image capturing apparatus for identifying the positions of the target object.

### [Variations of first embodiment]

The description in the first embodiment has taken an example of the image processing system applied to baseball, and has illustrated an aspect in which the positions of the three-dimensional shapes corresponding to the target object, i.e., the ball, are specified and the trajectory of the positions of the three-dimensional shapes is rendered in a virtual viewpoint image. However, the application of the image processing system is not limited to baseball. For example, the image processing system may be applied to ball games other than baseball, such as soccer and table tennis. The target object is not limited to a ball and may be an item such as a shuttlecock in badminton.

The description in the first embodiment has illustrated, as an example of the processing of obtaining the three-dimensional shape data by the specifying unit 205, an aspect in which the data is read from a location such as the auxiliary storage device 306. However, the method of obtaining the three-dimensional shape data by the specifying unit 205 is not limited to the above manner. For example, the shape estimation unit 202 may output, to the specifying unit 205, the three-dimensional shape data obtained through the estimation processing while storing the data in a location such as the auxiliary storage device 306. The specifying unit 205 may thus receive the three-dimensional shape data output by the shape estimation unit 202.

The description in the first embodiment has illustrated, as an example of the generation (rendering) processing by the image generation unit 204, an aspect in which the trajectory information is obtained based on the timecode in the virtual viewpoint information. However, the method of obtaining the trajectory information by the image generation unit 204 is not limited to the above manner. For example, the image generation unit 204 may obtain, from a location such as the auxiliary storage device 306, the trajectory information for a period corresponding to a predetermined number of frames starting at any timepoint different from the timepoint of the timecode in the virtual viewpoint information, or for a period between any such timepoint and any other timepoint.

The description in the first embodiment has illustrated, as an example of the generation (rendering) processing by the image generation unit 204, an aspect in which a virtual object such as mesh models or two-dimensional billboards is arranged at the coordinates of the three-dimensional shapes indicated by the trajectory information. However, the method of arranging the virtual object by the image generation unit 204 is not limited to the above manner. For example, the image generation unit 204 may arrange, as the virtual object, a mesh model that represents a line connecting the coordinate points of the three-dimensional shapes indicated by the obtained trajectory information.

The first embodiment has not specifically mentioned about the size of the virtual object, such as mesh models, to be arranged. However, basically it is desirable that the size of the virtual object representing the trajectory be the same or substantially the same as the size of the target object (the ball). This allows the image generation unit 204 to generate a virtual viewpoint image containing a representation that is readily recognizable by the viewer as the trajectory of the target object.

However, depending on the angle of view at the virtual viewpoint, or on the distances from the virtual viewpoint to three-dimensional shapes corresponding to the target object, the representation of a trajectory distant from the virtual viewpoint may be smaller in the virtual viewpoint image and therefore less visible to the viewer. To address this, for example, the image generation unit 204 may arrange a virtual object larger than the actual size of the target object. The image generation unit 204 may also automatically determine the size of the virtual object to be arranged, based on the angle of view at the virtual viewpoint or the distances from the virtual viewpoint to three-dimensional shapes corresponding to the target object.

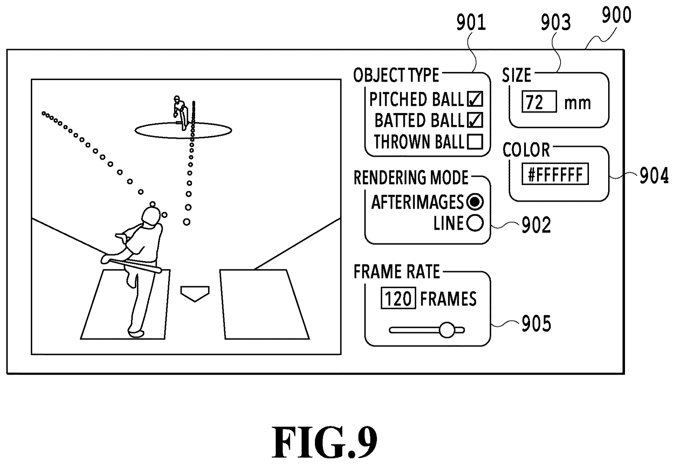

The image processing apparatus 102 may have a function of displaying a GUI on the display apparatus 103 for receiving specifications from the user, including the specifications of the types and the rendering mode of the trajectory of the target object to be rendered in the virtual viewpoint image. FIG. 9 is a diagram illustrating an example of a GUI 900 according to a variation of the first embodiment. As an example, the GUI 900 includes an area 901 for receiving a setting for selecting the types of the object to be rendered as a trajectory, and an area 902 for receiving a setting for selecting the rendering mode of the trajectory. The GUI 900 also includes an area 903 for receiving a setting of the size of a virtual object used for rendering the trajectory, and an area 904 for receiving a setting of the color of the virtual object. The GUI 900 also includes an area 905 for receiving a setting of the frame rate of the virtual viewpoint image. The user can provide inputs in the areas 901 to 905 of the GUI 900 using the operation unit 308, thereby configuring settings of the image processing apparatus 102.

The description in the first embodiment has illustrated an example in which a ball thrown by a fielder is simply assigned the identifier type "thrown ball." However, the identifier types are not limited to such classification. For example, the region 603 shown in FIG. 6 may be subdivided into or limited to smaller regions. The trajectory of three-dimensional shapes corresponding to the target object originating from a predetermined region may then be specified, as with the specifying of a batted ball. This allows more specific identification of the ball, such as a thrown ball from a predetermined infielder, e.g., the third baseman, or a returned ball from an outfielder.

The description in the first embodiment has illustrated, as an example, an aspect in which the trajectories of the movements of the three-dimensional shapes corresponding to a ball in baseball is classified as a pitched ball, a batted ball, or a thrown ball. However, the classification of the trajectories of the movements of the three-dimensional shapes corresponding to the target object is not limited to the above manner. For example, the image processing apparatus 102 according to the present disclosure may be applied to other ball games, such as soccer. In an example where the imaging subject is soccer, the regions below may be preset and the specifying unit 205 may rely on the set regions to classify the trajectories of the movements of the three-dimensional shapes corresponding to the target object. Specifically, examples of preset regions for specifying the trajectories of the three-dimensional shapes corresponding to the target object may include the following: a region that includes the goal and the goal area; and regions that each include a predetermined start point where play is to resume in a case such as a corner kick or a throw-in. The specifying unit 205 may then identify, for example, the trajectory of the three-dimensional shapes corresponding to the target object in each of such preset regions.

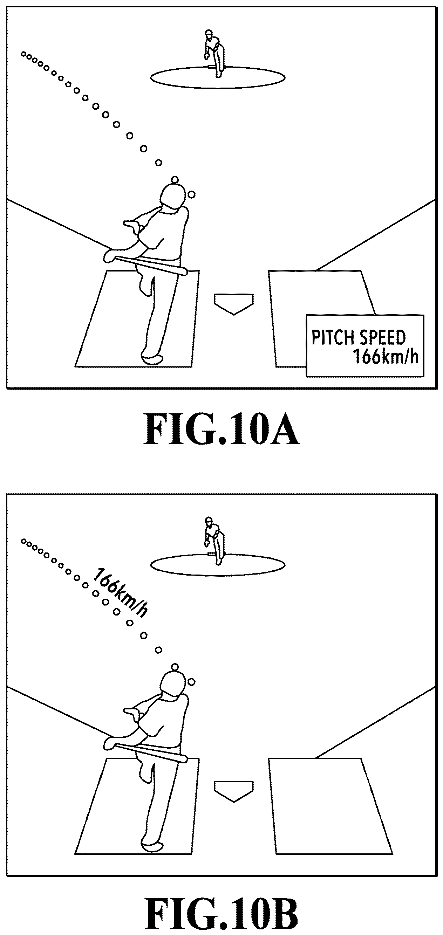

The description in the first embodiment has illustrated, as an example, an aspect in which the trajectory of the movements of the three-dimensional shapes corresponding to the target object is rendered in the virtual viewpoint image in accordance with the trajectory information. However, what is rendered in the virtual viewpoint image is not limited to the trajectory of the movements of the three-dimensional shapes corresponding to the target object. For example, in addition to rendering the trajectory, the image generation unit 204 may render a representation indicating the speed of a pitched ball by superimposing the representation on the virtual viewpoint image, based on the velocity information of the three-dimensional shapes identified as a pitched ball. FIGS. 10A and 10B are diagrams illustrating examples of virtual viewpoint images according to variations of the first embodiment. The virtual viewpoint images shown in FIGS. 10A and 10B each include a representation indicating the speed of a batted ball, in addition to a representation of the trajectory of the batted ball.

The image generation unit 204 has been described above as generating a virtual viewpoint image that includes a representation of the trajectory of the target object (the ball). Alternatively, the image generation unit 204 may determine, in accordance with an instruction from the user or some other entity, whether to include the representation of the trajectory of the target object in the virtual viewpoint image. Specifically, for example, in response to an instruction not to include the representation of the trajectory of the target object in the virtual viewpoint image, the image generation unit 204 may generate a virtual viewpoint image that does not include the representation of the trajectory of the target object.

The description in the first embodiment has illustrated, as an example of the obtainment processing by the viewpoint obtaining unit 203, an aspect in which the viewpoint obtaining unit 203 obtains the virtual viewpoint information, including information on the position and orientation of the virtual viewpoint, by receiving signals corresponding to inputs from the operation unit 308. Alternatively, the viewpoint obtaining unit 203 may obtain the information on the position and orientation of the virtual viewpoint by determining the position or orientation of the virtual viewpoint based on information on the trajectory of the three-dimensional shapes corresponding to the target object, included in the trajectory information. For example, the viewpoint obtaining unit 203 determines the orientation of the virtual viewpoint so that the coordinates, included in the trajectory information, of the three-dimensional shape corresponding to the target object (the ball) at the time of generating the virtual viewpoint image are positioned at the center of the field of view of the virtual viewpoint. This achieves virtual camera work such that a fast-moving object like a ball is kept within the angle of view of the virtual viewpoint image. Furthermore, this achieves virtual camera work that is not possible in reality, such as tracking the ball from behind with respect to its moving direction.

The description in the first embodiment has illustrated an aspect in which the specifying unit 205 performs the processing of identifying the three-dimensional shapes corresponding to the target object, identifying the trajectory, and assigning identifiers based on the identification result. However, the processing performed by the specifying unit 205 is not limited to the above manner. For example, the specifying unit 205 may only perform the processing of identifying the three-dimensional shapes corresponding to the target object, and the image generation unit 204 may determine whether the trajectory of the target object need to be rendered based on the position or velocity of each three-dimensional shape corresponding to the target object, included in the trajectory information.

The description in the first embodiment has illustrated an aspect in which the specifying unit 205 performs the processing of identifying the three-dimensional shapes corresponding to the target object from among all the three-dimensional shapes estimated by the shape estimation unit 202. Alternatively, the specifying unit 205 may perform the processing of identifying the three-dimensional shapes corresponding to the target object from among not all of the three-dimensional shapes estimated by the shape estimation unit 202. For example, in applications where only the identification of a pitched ball is required, the specifying unit 205 may perform the processing of identifying the three-dimensional shapes corresponding to the target object from among only the three-dimensional shapes within the region 601 shown in FIG. 6. In this case, assigning identifiers in the processing at S506 shown in FIG. 5 may be omitted because all the specified three-dimensional shapes corresponding to the target object represent a pitched ball.

### [Other Embodiments]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image processing apparatus comprising:
a shape obtaining unit configured to obtain shape data indicating three-dimensional shape of each object present in a target space;
a specifying unit configured to specify, from among the three-dimensional shape of each object indicated by the shape data, a target three-dimensional shape such that a size of the three-dimensional shape is within a predetermined range, and to generate trajectory information that indicates a trajectory of the target three-dimensional shape specified, in which information on positions of the target three-dimensional shape and a corresponding timecode are associated;
a viewpoint obtaining unit configured to obtain virtual viewpoint information indicating a position of a virtual viewpoint and a viewing direction at the virtual viewpoint; and
an image generation unit configured to generate, based on the shape data, the trajectory information, and the virtual viewpoint information, a virtual viewpoint image that includes a representation of the trajectory of the target three-dimensional shape and that corresponds to appearance from the virtual viewpoint.

2. The image processing apparatus according to claim 1, wherein
the specifying unit specifies the target three-dimensional shape using, as the size of the three-dimensional shape, at least one of a volume, a surface area, and an external dimension of the three-dimensional shape.

3. The image processing apparatus according to claim 1 or 2, wherein
if a distance between a position of one target three-dimensional shape at one timepoint and a position of another target three-dimensional shape at another timepoint proximate to the one timepoint is within a predetermined range, the specifying unit determines that the one target three-dimensional shape and the other target three-dimensional shape correspond to an identical object and generates the trajectory information for the identical object.

4. The image processing apparatus according to any one of claims 1 to 3, wherein:
one or more predetermined regions are preset in the target space, and
the specifying unit performs processing of specifying the target three-dimensional shape only for the three-dimensional shape present in the predetermined region among the three-dimensional shape of each object indicated by the shape data.

5. The image processing apparatus according to any one of claims 1 to 4, wherein:
the image generation unit generates the virtual viewpoint image that includes the representation of the trajectory of the target three-dimensional shape by arranging at the positions of the target three-dimensional shape indicated by the trajectory information, a three-dimensional shape representing the trajectory of the target three-dimensional shape and by performing rendering processing based on the shape data and the virtual viewpoint information.

6. The image processing apparatus according to claim 5, wherein
the image generation unit arranges, as the three-dimensional shape representing the trajectory of the target three-dimensional shape, a three-dimensional shape that includes a line connecting the positions of the target three-dimensional shape indicated by the trajectory information.

7. The image processing apparatus according to any one of claims 1 to 4, wherein:
the image generation unit generates the virtual viewpoint image that includes the representation of the trajectory of the target three-dimensional shape by arranging, at the positions of the target three-dimensional shape indicated by the trajectory information, a virtual object composed of two-dimensional representations of the trajectory of the target three-dimensional shape and by performing rendering processing based on the shape data and the virtual viewpoint information.

8. The image processing apparatus according to claim 7, wherein
the image generation unit arranges the virtual object composed of the two-dimensional representations on a plane orthogonal to the viewing direction at the virtual viewpoint indicated by the virtual viewpoint information.

9. The image processing apparatus according to any one of claims 1 to 8, wherein:
one or more predetermined regions are preset in the target space, and
the specifying unit assigns an identifier to the trajectory information corresponding to the target three-dimensional shape so that the identifier differs among the predetermined regions in which the target three-dimensional shape is present.

10. The image processing apparatus according to any one of claims 1 to 9, wherein:
the specifying unit specifies, based on a difference between positions of the target three-dimensional shape corresponding to an identical object at timepoints proximate to each other, at least one of a moving direction and a velocity of the target three-dimensional shape corresponding to the identical object, and generates the trajectory information that includes information on the specified at least one of the moving direction and the velocity of the target three-dimensional shape.

11. The image processing apparatus according to claim 10, wherein
the specifying unit assigns an identifier to the trajectory information corresponding to the target three-dimensional shape so that the identifier differs depending on at least one of the positions, the moving direction, and the velocity of the target three-dimensional shape.

12. The image processing apparatus according to claim 10 or 11, wherein
the image generation unit determines, based on the positions, the moving direction, and the velocity of the target three-dimensional shape, whether to include the representation of the trajectory of the target three-dimensional shape in the virtual viewpoint image.

13. The image processing apparatus according to claim 9 or 11, wherein
the image generation unit determines, based on the identifier assigned to the trajectory information, whether to include, in the virtual viewpoint image, the representation of the trajectory of the target three-dimensional shape that are based on the trajectory information having the identifier assigned thereto.

14. The image processing apparatus according to any one of claims 1 to 13, wherein:
the image generation unit determines, based on a user instruction, whether to include the representation of the trajectory of the target three-dimensional shape in the virtual viewpoint image.

15. The image processing apparatus according to any one of claims 1 to 14, wherein:
the image generation unit modifies, based on a user instruction, at least one of a length, a size, and a color of the trajectory of the target three-dimensional shape for presenting the representation of the trajectory.

16. An image processing method comprising the steps of:
obtaining shape data indicating three-dimensional shapes of objects present in a target space;
specifying, from among the three-dimensional shapes of the objects indicated by the shape data, a target three-dimensional shape such that a size of each three-dimensional shape is within a predetermined range, and generating trajectory information that indicates a trajectory of the target three-dimensional shape specified and that includes information on positions of the target three-dimensional shape and timecodes associated respectively with the target three-dimensional shape;
obtaining virtual viewpoint information indicating a position of a virtual viewpoint and a viewing direction at the virtual viewpoint; and
generating, based on the shape data, the trajectory information, and the virtual viewpoint information, a virtual viewpoint image that includes a representation of the trajectory of the target three-dimensional shape and that corresponds to appearance from the virtual viewpoint.

17. A program for causing a computer to function as the image processing apparatus according to any one of claims 1 to 15.
